Europäisches Patentamt

European Patent Office

Office européen des brevets

(11) Veröffentlichungsnummer: **0 154 111**
**A2**

(12) **EUROPÄISCHE PATENTANMELDUNG**

(21) Anmeldenummer: 85100099.2

(22) Anmeldetag: 07.01.85

(51) Int. Cl.⁴: **F 16 L 37/26**

(30) Priorität: 09.02.84 DE 3404632

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: SIMONA GmbH
Teichweg 16
D-6570 Kirn-Nahe(DE)

(72) Erfinder: Spengler, Richard
Bundesstrasse 9
D-7803 Gundelfingen(DE)

(74) Vertreter: Boeters, Hans Dietrich, Dr. et al,
Boeters, Bauer & Partner Thomas-Wimmer-Ring 14
D-8000 München 22(DE)

(54) Schnellverbindung für Rohre.

(57) Bei einer Schnellverbindung für Rohre, insbesondere für Beregnungsanlagen und mobile Rohrleitungssysteme, bestehend aus einer an einem Rohr befestigbaren Muffe (10, 10', 10") mit einem Dichtelement und aus einem an einem anderen Rohr befestigbaren, in die Muffe einsetzbaren Stutzen (30), weist die Muffe einen von oben zugänglichen Einsetzabschnitt (16) mit einer Kupplungsnut (19) und eine im Innern der Muffe vorgesehene umlaufende Aufnahmenut (22) für das Dichtelement auf, und der Stutzen besitzt an seiner Außenseite einen in die Kupplungsnut einsetzbaren Kupplungsnocken.

Fig. 1

**BOETERS, BAUER & PARTNER**
PATENTANWÄLTE
EUROPEAN PATENT ATTORNEYS

THOMAS-WIMMER-RING 14
D-8000 MÜNCHEN 22

PAe BOETERS, BAUER & PARTNER
THOMAS-WIMMER-RING 14, D-8000 MÜNCHEN 22

DIPL.-CHEM. DR. HANS D. BOETERS
DIPL.-ING. ROBERT BAUER
MÜNCHEN

DIPL.-ING. VINCENZ v. RAFFAY
DIPL.-CHEM. DR. THOMAS FLECK
HAMBURG

TELEFON: (089) 22 00 92
TELEX: 5 24 876 rrm
TELEGRAMME: PROVENTION, MÜNCHEN

0154111

## Schnellverbindung für Rohre

Die Erfindung betrifft eine Schnellverbindung für Rohre, insbesondere für Beregnungsanlagen und mobile Rohrleitungssysteme, bestehend aus einer an einem Rohr befestigbaren Muffe, einem Dichtelement und einem an einem anderen Rohr befestigbaren, in die Muffe einsetzbaren Stutzen.

Bei Rohrleitungen, die aus bestimmten Gründen häufiger anders verlegt werden müssen, wie beispielsweise bei Beregnungsanlagen oder mobilen Rohrleitungssystemen, muß die Möglichkeit bestehen, die einzelnen Rohre schnell miteinander zu verbinden bzw. voneinander zu trennen. Hierzu sind bereits sogenannte Schnellkupplungen mit den eingangs genannten Merkmalen bekannt, bei denen an der Muffe ein Verriegelungshebel oder -bügel schwenkbar angeordnet ist, der nach einem Verschwenken die Muffe fest mit dem Stutzen koppeln kann.

Als nachteilig ist bei den vorbekannten Kupplungen anzusehen, daß sich deren Herstellungsaufwand unter anderem aufgrund der zusätzlichen Arretierungsteile in unerwünschter und die Produktionskosten erhöhender Weise vergrößert und daß das Kuppeln und Trennen von Rohren nur in relativ aufwendiger Weise möglich ist.

Der Erfindung liegt die Aufgabe zugrunde, eine Schnellverbindung der eingangs genannten Gattung zu schaffen, die mit geringerem Aufwand herstellbar ist und eine einfachere Handhabung ermöglicht.

Erfindungsgemäß wird diese Aufgabe durch die im Kennzeichen des Anspruchs 1 genannten Merkmale gelöst. Danach weist die Muffe einen von oben zugänglichen Einsetzabschnitt mit einer Kupplungsnut auf, und der Stutzen besitzt an seiner Außenseite einen in die Kupplungsnut einsetzbaren Kupplungsnocken.

In günstiger Weise besitzt die erfindungsgemäße Schnellverbindung keine beweglichen zusätzlichen Verriegelungselemente, sondern stellt allein durch die geeignete Formgebung der Muffe und des entsprechend dazu passenden Stutzens eine für alle Rohrdurchmesser anwendbare Kupplung dar, die sicher und zuverlässig funktioniert. Der Herstellungsaufwand wird nicht nur durch das Fehlen zusätzlicher Verriegelungselemente, sondern auch durch die einfache konstruktive Gestaltung der Muffe und des Stutzens wesentlich erleichtert. Auch die Handhabung der Schnellverbindung wird wesentlich vereinfacht, da es zur Herstellung der Verbindung nur erforderlich ist, den Stutzen schräg von oben in die Muffe einzuführen und den Kupplungsnocken in Eingriff mit der Kupplungsnut zu bringen.

Der Einsetzabschnitt ist vorzugsweise im Bereich der unteren Hälfte der Muffe gebildet und steht bevorzugt von der Muffe in deren Längsrichtung vor. Die hierdurch erzielbaren Vorteile hinsichtlich der Herstellung und der Handhabung werden noch vergrößert, wenn die Kupplungsnut schräg zum Innern der Muffe ausläuft, und wenn zudem bevorzugt im Innern der Muffe in Einsetzrichtung hinter einer umlaufenden Aufnahmenut für das Dichtelement ein Stutzenanschlag ausgebildet ist. Der vorgesehene Stutzenanschlag begrenzt die Einstecktiefe des Stutzens derart, daß durch die gegenseitige Abstimmung der Abmessungen von Muffe und Stutzen ein problemloser Eingriff des Kupplungsnockens in die Kupplungsnut gewährleistet ist. Andererseits ist es für den Transport von warmen Medien hinsichtlich auftretender Materialdehnungen günstig, wenn die Kupplungsnut breiter als der Kupplungsnocken ist und zwischen dem eingesetzten Stutzen und dem Stutzenanschlag ein Dehnungszwischensaum besteht. Die umlaufende Aufnahmenut für das Dichtelement kann alternativ auch am Stutzen gebildet sein.

Nach einer bevorzugten Ausführungsform der Erfindung erstrecken sich der Kupplungsnocken etwa über einem Drittel bis zur Hälfte des Außenumfangs des Stutzens. Hierdurch wird die Handhabung der Schnellverbindung erleichtert, da das Einführen des Stutzens mit nach oben weisendem Kupplungsnocken in einem flacheren Winkel möglich ist und die Befestigung von Muffe und Stutzen lediglich durch eine relative Drehung des Stutzens gegenüber der Muffe oder umgekehrt zur Herstellung eines Eingriffs des Kupplungsnockens in die Kupplungsnut erfolgt.

Bevorzugt weist der Kupplungsnocken einen rechtwinkligen Querschnitt auf. Wenn sich die Kupplungsnut senkrecht zur Längsachse der Muffe erstreckt und der Kupplungsnocken senkrecht zur Längsachse des Stutzens angeordnet ist, läßt sich die Schnellverbindung fertigungstechnisch leichter herstellen und ermöglicht zudem ein richtungsunabhängiges Einsetzen des Kupplungsnockens in die Kupplungsnut.

Die Aufnahmenut in der Muffe kann für ein stets abdichtendes O-Ring-Dichtelement bestimmt sein. Bevorzugt ist sie für eine Lippendichtung vorgesehen, die nur bei entsprechendem Wasserdruck abdichtet und durch die im drucklosen Zustand Flüssigkeit zwischen Rohr und Dichtung abfließen kann. Ferner kann in vorteilhafter Weise noch vorgesehen sein, daß die Muffe einen radialen Gewindeabgang besitzt, an den beispielsweise ein Manometer oder ein kleineres Abzweigrohr befestigt werden kann. Zur Befestigung der Muffe und des Stutzens an den jeweiligen Rohren sind bevorzugter-weise jeweils Rohrbefestigungsansätze vorgesehen, die dem Rohrquerschnitt entsprechen und sich dadurch problemlos an das Rohrende, beispielsweise durch Heizelementstumpfschweißen bei Kunststoffrohren und Kunststoffstutzen und -muffen, befestigen lassen.

Nach einer Weiterbildung der Erfindung kann die Muffe auch entsprechend als Doppelmuffe ausgebildet sein, um zwei Rohre mit aufeinanderweisenden Stutzen miteinander verbinden zu können. Desgleichen kann auch der Stutzen als Doppelstutzen ausgebildet sein, um Muffen aufweisende Rohrenden miteinander zu verbinden. Überdies kann der Stutzen auch in günstiger Weise als Verschlußstopfen ausgebildet sein.

In bevorzugter Weise besitzt die Muffe einen im wesentlichen quadratischen Außenquerschnitt mit einer Auflagefläche, um eine sichere Anordnung der Schnellverbindung zu gewährleisten.

Besonders vorteilhaft ist es, wenn die Muffe und der Stutzen aus Kunststoff bestehen und zur Verbindung von Kunststoffrohren eingesetzt werden, insbesondere, wenn jeweils die Muffe und der Stutzen aus demselben Kunststoff wie die jeweiligen Rohre bestehen. Dies bietet die insbesondere für Beregnungsanlagen wichtigen Vorzüge, daß durch ein Voll-Kunststoffsystem, ggf. aus verschiedenen Kunststoffen, gegenüber konventionellen Systemen eine höhere Sicherheit und eine größere Wirtschaftlichkeit gewährleistet ist. Die Schnellverbindung besitzt eine vergleichsweise höhere Lebensdauer, ist auch bei Kälte bruchunempfindlich, ist korrosions- und UV-beständig, abriebfest und besitzt ein geringes Gewicht, wodurch die bereits vereinfachte Handhabung noch weiter erleichtert wird, da nur ein Mann zur Installation erforderlich ist.

Weitere Einzelheiten, Merkmale und Vorteile der Erfindung sind auch dem anschließenden Beschreibungsteil zu entnehmen, in dem Ausführungsbeispiele der Erfindung unter Bezugnahme auf die beigefügten Zeichnungen näher erläutert werden. Es zeigen:

Fig. 1    die Seitenansicht einer erfindungsgemäß gestalteten Muffe;

Fig. 2    eine Vorderansicht der Muffe von Fig. 1;

Fig. 3    einen Schnitt entlang der Schnittlinie III - III in Fig. 2;

6

0154111

Fig. 4   die Draufsicht auf einen erfindungsgemäß ausgebildeten Stutzen;

Fig. 5   einen Schnitt entlang der Schnittlinie V - V in
Fig. 4;

Fig. 6   einen Vertikalschnitt durch die Längsachse einer
modifizierten Ausbildung der erfindungsgemäßen
Muffe;

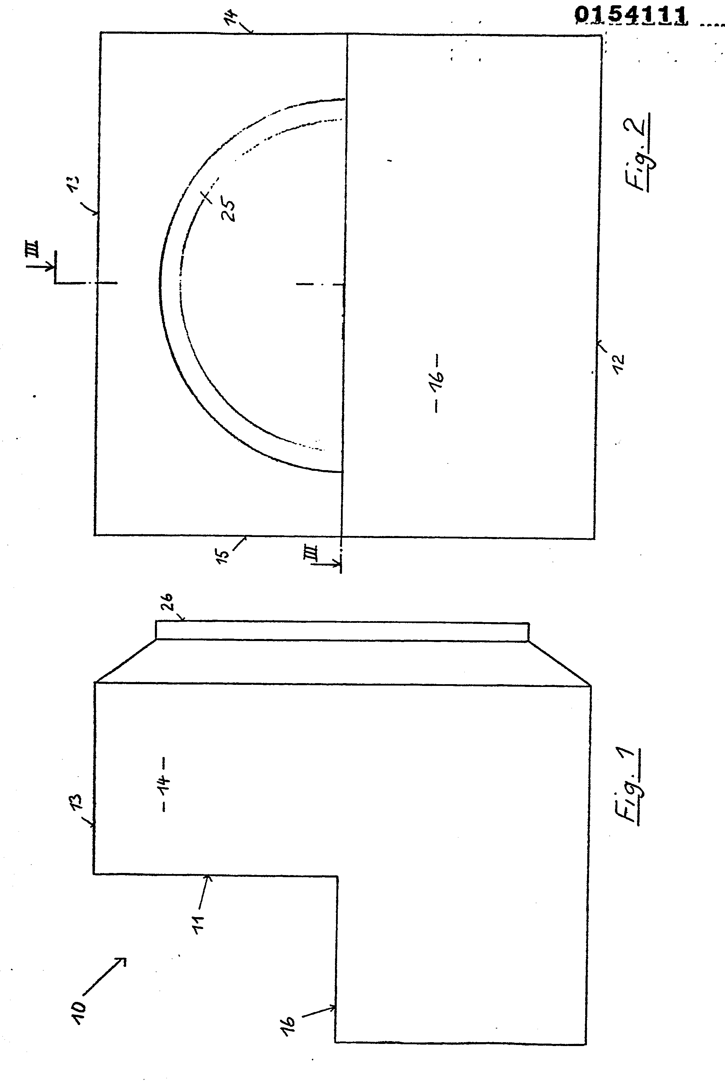

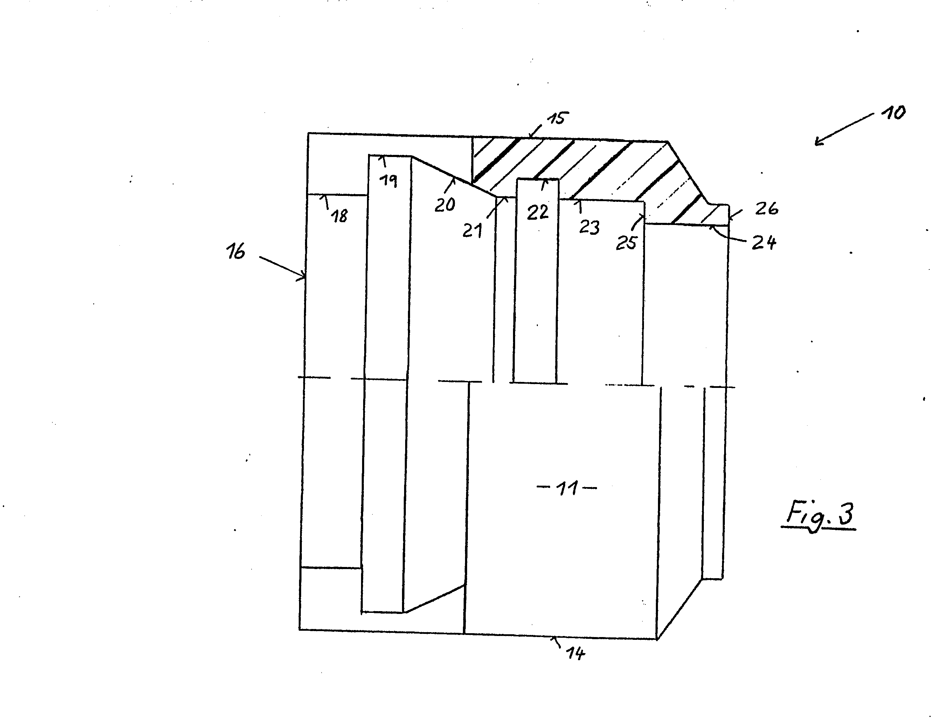

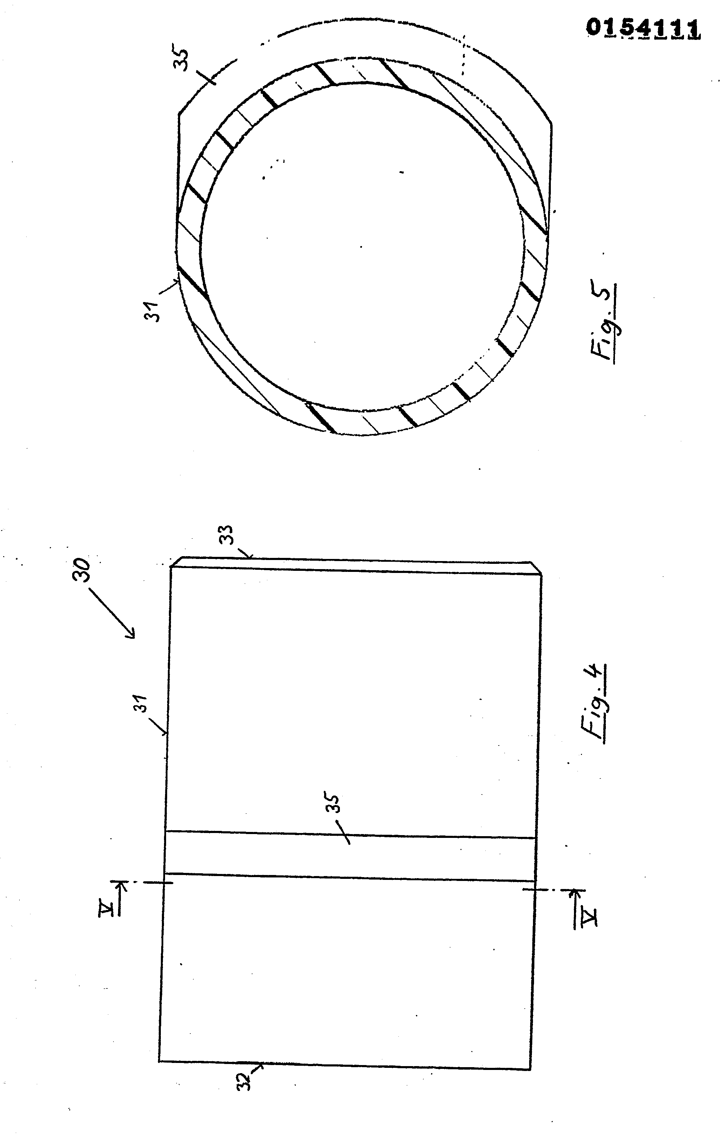

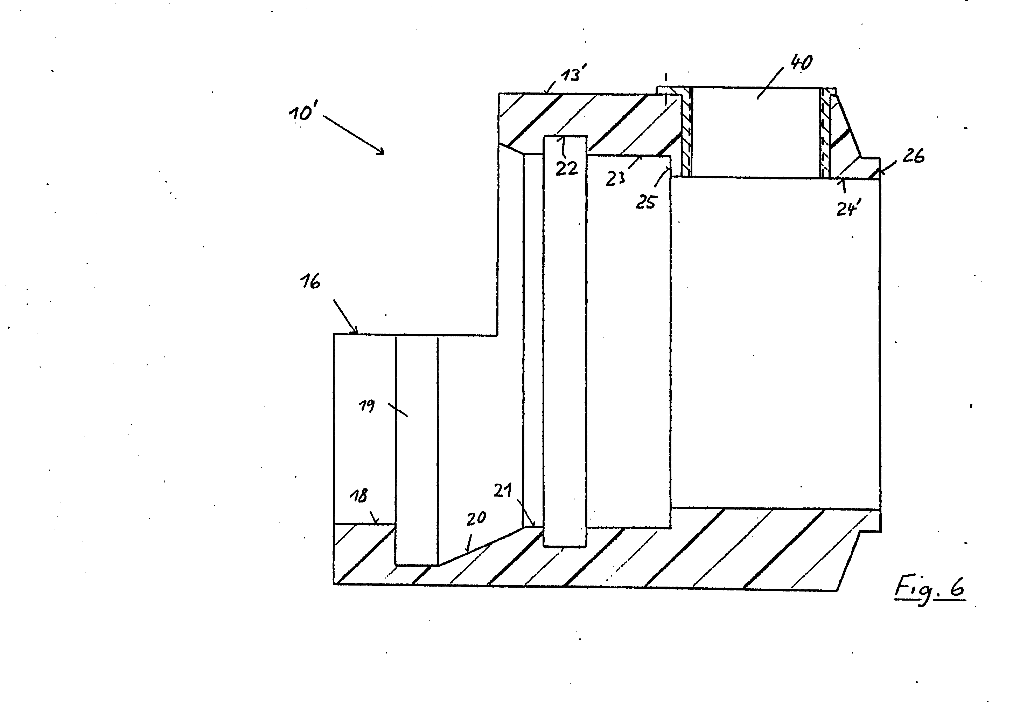

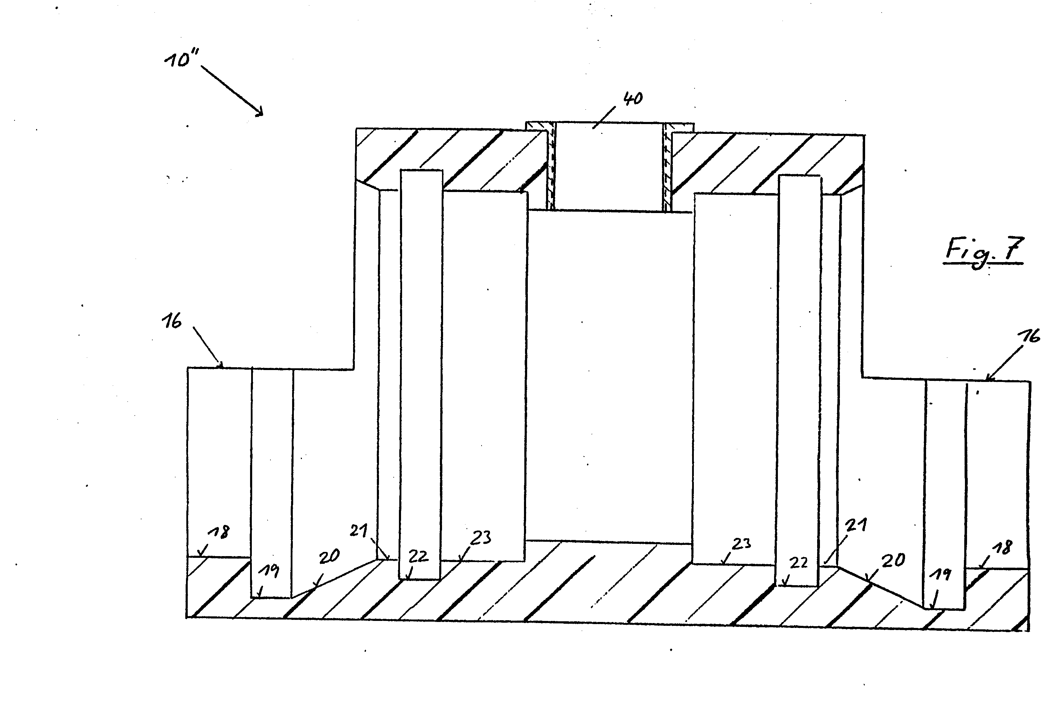

Fig. 7   einen Vertikalschnitt durch die Längsachse einer
als Doppelmuffe ausgebildeten erfindungsgemäßen
Muffe; und

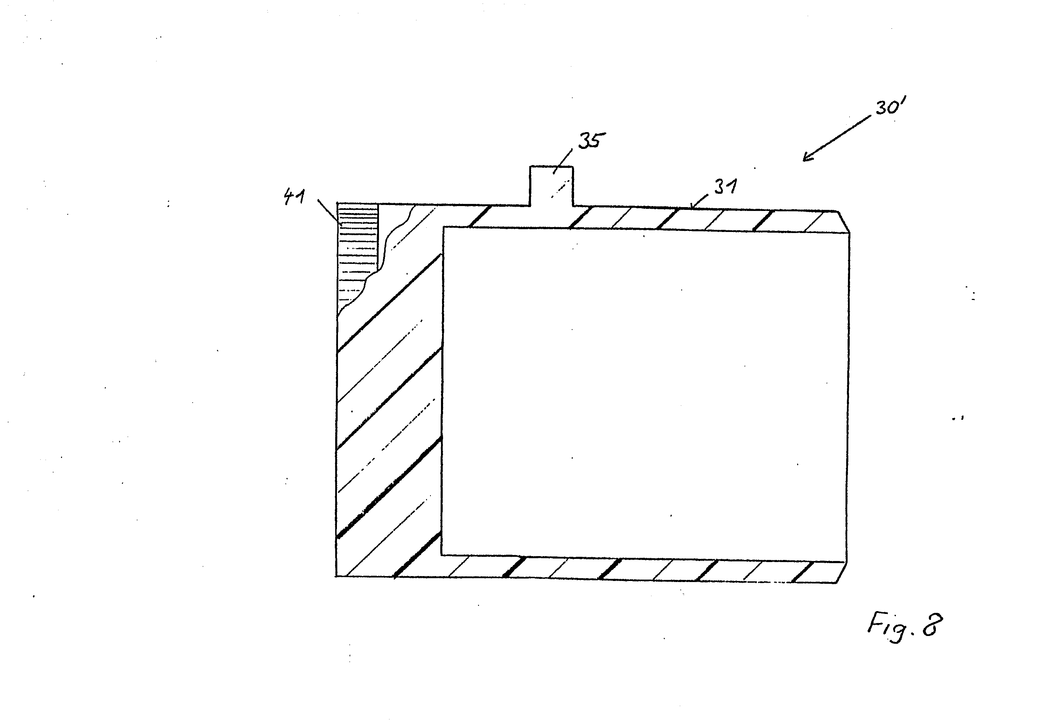

Fig. 8   einen Vertikalschnitt durch die Längsachse eines
als Verschlußstopfen ausgebildeten Stutzens mit
den erfindungsgemäßen Merkmalen.

In Fig. 1 ist die Seitenansicht einer erfindungsgemäß ausgebildeten Muffe 10 dargestellt. Die Muffe 10 besteht aus
einem Hauptteil 11, der, wie aus Fig. 2 zu entnehmen ist,
einen im wesentlichen quadratischen Außenquerschnitt mit
einer Auflagefläche 12, einer Deckfläche 13 und Seitenflächen 14 und 15 besitzt. Im Bereich der unteren Hälfte
der Muffe 10 steht in deren Längsrichtung ein Einsetzabschnitt 16 vor, dessen Seitenflächen in die Seitenflächen
14 und 15 des Hauptteils 11 und dessen Auflagefläche in
die Auflagefläche 12 des Hauptteils 11 übergehen. Der Einsetzabschnitt 16 erstreckt sich bis zur halben Höhe der
Seitenflächen 14 bzw. 15.

Im Zusammenhang mit Fig. 3 ist zu erkennen, daß in den
Einsatzabschnitt 16 die untere Hälfte einer kreisförmigen
Profilausbildung vorgesehen ist, die sich im einzelnen
aus einem ersten Führungsabschnitt 18, einer Kupplungsnut
19 und einem Übergangsabschnitt 20 zusammensetzt und sich im Innern der Muffe 10 über einen zweiten Führungsabschnitt 21, eine Aufnahmenut 22 für ein nicht dargestelltes Dichtelement, rohrförmige Abschnitte 23 und 24 sowie
einen zwischen diesen gebildeten Stutzenanschlag 25 bis zu
einem an der Rückseite der Muffe vorgesehenen Rohrbefestigungsansatz 26 fortsetzt. Die Seitenflächen 14 und 15 verjüngen sich konisch in den Bereich des Rohrbefestigungsansatzes 26. Die Kupplungsnut · 19 erstreckt sich senkrecht
zur Längsachse der Muffe 10 und kann in nicht dargestellter Weise breiter als ein Kupplungsnocken eines einsetzbaren Stutzens sein, wenn beim Transport warmer Medien
Materialdehnungen zu erwarten sind, wobei auch zwischen
dem eingesetzten Stutzen und dem Stutzenanschlag 25 ein
Dehnungszwischenraum besteht.

Die Muffe besteht aus Kunststoff, und der im wesentlichen
quadratischen Außenquerschnitt des Hauptteils 11 hat bei
diesem Ausführungsbeispiel eine Seitenlänge von 120 mm.
Der Durchmesser des ersten Führungsabschnitts beträgt 92 mm,
der Durchmesser der Aufnahmenut 22 liegt bei 110 mm, und
die Breite der Aufnahmenut ist etwa 10 mm. Der Übergangsabschnitt 20 reduziert den Durchmesser von  110 mm
wiederum auf den Durchmesser von 92 mm, der für den zweiten
Führungsabschnitt 21 und für den rohrförmigen Abschnitt 21
gilt. Die Aufnahmenut 22 hat eine Breite von etwa 13 mm
und einen Durchmesser von etwa 104 mm. Der Durchmesser
des rohrförmigen Abschnitts 24 beträgt etwa 77 mm, während
im Bereich des Rohrbefestigungsansatzes 26 eine konische
Verjüngung des Hauptteils mit quadratischem Querschnitt
auf einen Kreisquerschnitt mit einem Außendurchmesser von
90 mm erfolgt.

In Fig. 4 und Fig. 5 ist ein Stutzen 30 dargestellt, der
aus demselben  Kunststoff wie die Muffe 10 besteht. Der
Stutzen 30 besitzt einen rohrförmigen Aufbau mit einem
Mantel 31, einem Rohrbefestigungsansatz 32 und einer An-

schlagfläche 33. Der Stutzen 30 weist einen Kupplungsnocken 35 mit einem etwa rechtwinkligen Querschnitt auf,
der an der Außenseite des Stutzens in einem auf den Abstand
zwischen dem Stutzenanschlag 25 und der Kupplungsnut 19 an
der Muffe 10 abgestimmten Abstand von der Anschlagfläche
33 senkrecht zur Längsachse des Stutzens angeordnet ist.
Der Kupplungsnocken 35 erstreckt sich, wie in Fig. 5 dargestellt, aus dem Bereich der horizontalen Rohrachse nach
oben und folgt in seinem Profil nach jeweiligen Übergangsabschnitten beabstandet der Außenkontur des Mantels 31.

In dem dargestellten Ausführungsbeispiel besitzt der
Stutzen 30 etwa eine Länge von 88 mm und einem äußeren
Manteldurchmesser von etwa 90 mm. Der Innendurchmesser
des rohrförmigen Mantels beträgt etwa 77 mm, und die
Breite des Kupplungsnockens liegt bei etwa 10 mm. Der Abstand zwischen dem Mantel 31 und der gewölbten Außenkontur
der Kupplungsnocken 35 liegt ebenfalls etwa in der Größenordnung von 10 mm.

Zur Herstellung einer Schnellverbindung von Kunststoffrohren ist es zuvor erforderlich, die jeweiligen Rohrbefestigungsansätze 26 bzw. 32 der Muffe 10 bzw. des
Stutzens 30 an entsprechenden Rohrenden beispielsweise
durch Heizelementstumpfschweißung anzuschweißen. Für den
Einsatz der Schnellverbindung bei Beregnungsanlagen wird
dann in die Aufnahmenut 22 eine nicht dargestellte Lippendichtung eingesetzt, die nur bei entsprechendem Wasserdruck abdichtet, während das Wasser im drucklosen Zustand
zwischen Stutzen und Dichtung durchfließen kann. Danach
wird der Stutzen 30 mit dem nach oben gerichteten Kupplungsnocken 35 mit der Längsachse der Muffe 10 fluchtend
bis zum Stutzenanschlag in die Muffe 10 eingeschoben und
dann um $180^o$ gedreht, um den Kupplungsnocken 35 in Eingriff mit der Kupplungsnut 19 zu bringen. Durch die vorgesehenen Führungsabschnitte 18 und 21 und den rohrförmigen Abschnitt 23 der Muffe 10 wird eine sicher haltende Führung gewährleistet, und durch den Eingriff des Kupplungsnockens 35 in die Kupplungsnut 19 eine sichere, jedoch leicht lösbare Schnellverbindung geschaffen.

In Fig. 6 ist eine modifizierte Ausbildung einer Muffe 10' dargestellt, bei der der rohrförmige Abschnitt 24' länger als der Abschnitt 24 bei der Muffe 10 ausgebildet ist, um einen Bereich für das Vorsehen eines radialen Gewindeabgangs 40 zu schaffen, der bei diesem Ausführungsbeispiel aus einer an der Deckfläche 13' befestigten Messingschraubhülse besteht. Der Gewindeabgang 40 kann zum Befestigen eines Manometers oder einer kleineren Rohrleitung dienen.

Fig. 7 zeigt das Ausbildungsbeispiel einer Doppelmuffe, die aus zwei zu einer vertikalen Mittelebene spiegelbildlich angeordneten Muffenhälften besteht und keinen Rohrbefestigungsansatz aufweist. Auch bei dieser Doppelmuffe 10'' kann zusätzlich ein entsprechender radialer Gewindeabgang 40 vorgesehen sein. Mit der Doppelmuffe 10'' können Rohrenden schnell miteinander verbunden werden, die die erfindungsgemäßen Stutzen 30 besitzen.

In Fig. 8 ist ein modifizierter Stutzen 30' dargestellt, der als Verschlußstopfen eine schnelle Verbindung zu einer erfindungsgemäß ausgebildeten Muffe 10, 10' oder 10'' ermöglicht. Abweichend von der in den Fig. 4 und 5 gezeigten Darstellung ist das der Anschlagfläche 33 gegenüberliegende Ende des Stutzens 30' verschlossen und an der Außenseite ist im Bereich des Abschlußendes zur leichteren Handhabung eine Rändelung 41 vorgesehen.

Mit der dargestellten Schnellverbindung läßt sich in vorteilhafter Weise ein System aus Kunststoffrohren und Verbindern herstellen, das vielseitig einsetzbar ist. Insbesondere bei der Verwendung bei Beregnungsanlagen und der
Ausbildung der Rohre und der Schnellverbindung aus dem
gleichen Kunststoff bietet ein derartiges System gegenüber bisherigen Systemen eine höhere Sicherheit und eine
größere Wirtschaftlichkeit. Es kann eine höhere Lebensdauer durch das Vollkunststoffsystem erreicht werden, wobei auch bei Kälte eine Unempfindlichkeit gegen Bruch gewährleistet ist. Die Komponenten besitzen eine geringes
Gewicht, sind korrosions- und UV-beständig, abriebfest und
erlauben eine besonders leichte und einfache Handhabung bei
der Installation, die nur von einem Mann ausgeführt werden
kann.

**BOETERS, BAUER & PARTNER**
PATENTANWALTE
EUROPEAN PATENT ATTORNEYS
THOMAS-WIMMER-RING 14
D-8000 MÜNCHEN 22

PAe BOETERS, BAUER & PARTNER
THOMAS-WIMMER-RING 14, D-8000 MÜNCHEN 22

DIPL-CHEM. DR. HANS D. BOETERS
DIPL-ING. ROBERT BAUER
MÜNCHEN

DIPL-ING. VINCENZ v. RAFFAY
DIPL-CHEM. DR. THOMAS FLECK
HAMBURG

TELEFON: (089) 22 00 92
TELEX: 5 24 878 rrm
TELEGRAMME: PROVENTION, MÜNCHEN

0154111

## Schnellverbindung für Rohre

## Ansprüche

1. Schnellverbindung für Rohre, insbesondere für Beregnungsanlagen und mobile Rohrleitungssysteme, bestehend aus einer an einem Rohr befestigbaren Muffe, einem Dichtelement, und einem an einem anderen Rohr befestigbaren, in die Muffe einsetzbaren Stutzen, d a d u r c h   g e k e n n z e i c h n e t ,   daß die Muffe (10, 10', 10") einen von oben zugänglichen Einsetzabschnitt (16) mit einer Kupplungsnut (19) aufweist und der Stutzen (30) an seiner Außenseite (31) einen in die Kupplungsnut (19) einsetzbaren Kupplungsnocken (35) besitzt.

2.  Schnellverbindung nach Anspruch 1, d a d u r c h
g e k e n n z e i c h n e t , daß der Einsetzabschnitt
(16) im Bereich der unteren Hälfte der Muffe (10, 10', 10'')
gebildet ist.

3.  Schnellverbindung nach Anspruch 1 oder 2, d a -
d u r c h  g e k e n n z e i c h n e t , daß der Einsetzabschnitt (16) von der Muffe (10, 10', 10'') in deren Längsrichtung vorsteht.

4.  Schnellverbindung nach einem der vorangehenden Ansprüche, d a d u r c h  g e k e n n z e i c h n e t ,
daß die Kupplungsnut (19) schräg zum Innern der Muffe (10,
10', 10'') ausläuft (20).

5. Schnellverbindung nach einem der vorangehenden Ansprüche, d a d u r c h  g e k e n n z e i c h n e t ,
daß im Innern der Muffe (10, 10', 10") eine umlaufende
Aufnahmenut (22) für das Dichtelement vorgesehen ist.

6. Schnellverbindung nach einem der Ansprüche 1 bis 4,
d a d u r c h  g e k e n n z e i c h n e t , daß der
Stutzen (30) eine umlaufende Aufnahmenut für das Dichtelement aufweist.

7. Schnellverbindung nach Anspruch 5, d a d u r c h
g e k e n n z e i c h n e t , daß im Innern der Muffe
(10, 10', 10") in Einsetzrichtung hinter der Aufnahmenut (22) für das Dichtelement ein Stutzenanschlag (25)
ausgebildet ist.

8. Schnellverbindung nach Anspruch 7, d a d u r c h
g e k e n n z e i c h n e t , daß die Kupplungsnut (19)
breiter als der Kupplungsnocken (35) ist und zwischen dem eingesetzten Stutzen (30) und dem Stutzenanschlag
(25) ein Dehnungszwischenraum besteht.

9. Schnellverbindung nach einem der vorangehenden Ansprüche, d a d u r c h   g e k e n n z e i c h n e t ,
daß sich der Kupplungsnocken (35) etwa über ein Drittel
bis zur Hälfte des Außenumfangs des Stutzens (30) erstreckt.

10. Schnellverbindung nach Anspruch 9, d a d u r c h
g e k e n n z e i c h n e t , daß der Kupplungsnocken
(35) einen rechtwinkligen Querschnitt aufweist.

11. Schnellverbindung nach einem der vorangehenden Ansprüche, d a d u r c h   g e k e n n z e i c h n e t ,
daß sich die Kupplungsnut (19) senkrecht zur Längsachse
der Muffe (10, 10', 10'') erstreckt und der Kupplungsnocken (35) senkrecht zur Längsachse des Stutzens (30)
angeordnet ist.

12. Schnellverbindung nach einem der vorangehenden Ansprüche, d a d u r c h   g e k e n n z e i c h n e t ,
daß die Aufnahmenut (22) in der Muffe (10, 10', 10'')
für eine Lippendichtung vorgesehen ist, die nur bei entsprechendem Flüssigkeitsdruck abdichtet und durch die im
drucklosen Zustand Flüssigkeit abfließen kann.

13. Schnellverbindung nach einem der vorangehenden Ansprüche, d a d u r c h   g e k e n n z e i c h n e t ,
daß die Muffe (10',10'') einen radialen Gewindeabgang
(40) aufweist.

14. Schnellverbindung nach einem der vorangehenden Ansprüche, d a d u r c h   g e k e n n z e i c h n e t ,
daß die Muffe (10) und der Stutzen (30) jeweils einen
Rohrbefestigungsansatz (26) bzw. (32) für das jeweilige
Rohrende aufweisen.

15.    Schnellverbindung nach einem der Ansprüche 1 bis
13, d a d u r c h   g e k e n n z e i c h n e t , daß
die Muffe als Doppelmuffe (10'') ausgebildet ist.

16.    Schnellverbindung nach einem der Ansprüche 1 bis
13, d a d u r c h   g e k e n n z e i c h n e t , daß
der Stutzen als Doppelstutzen ausgebildet ist.

17.    Schnellverbindung nach einem der Ansprüche 1 bis 13 ,
d a d u r c h   g e k e n n z e i c h n e t , daß der
Stutzen als Verschlußstopfen ausgebildet ist.

18.    Schnellverbindung nach einem der vorangehenden Ansprüche, d a d u r c h   g e k e n n z e i c h n e t ,
daß die Muffe (10, 10', 10'') einen im wesentlichen quadratischen Außenquerschnitt mit einer Auflagefläche (12)
aufweist.

19.    Schnellverbindung nach einem der vorangehenden Ansprüche, d a d u r c h   g e k e n n z e i c h n e t ,
daß die Muffe (10, 10', 10'') und der Stutzen (30) aus
Kunststoff bestehen.

20.    Schnellverbindung nach Anspruch 19 , d a d u r c h
g e k e n n z e i c h n e t , daß jeweils die Muffe und
der Stutzen aus demselben Kunststoff wie die jeweiligen
Rohre bestehen.

Fig. 2

Fig. 1

0154111

Fig.3

_Fig. 4_

_Fig. 5_

Fig.6

10"

40

16

18

19

20

21

22

23

23

22

21

20

19

18

16

*Fig. 7*

Fig. 8